(19) Europäisches Patentamt / European Patent Office / Office européen des brevets

(11) **EP 2 992 602 B1**

(12) **FASCICULE DE BREVET EUROPEEN**

(45) Date de publication et mention
de la délivrance du brevet:
**19.09.2018 Bulletin 2018/38**

(21) Numéro de dépôt: **14727595.2**

(22) Date de dépôt: **29.04.2014**

(51) Int Cl.:
*H02P 29/024* (2016.01)   *B60L 3/00* (2006.01)
*B60L 3/12* (2006.01)   *B60L 15/02* (2006.01)
*H02P 21/22* (2016.01)   *H02P 21/14* (2016.01)

(86) Numéro de dépôt international:
**PCT/FR2014/051022**

(87) Numéro de publication internationale:
**WO 2014/177802 (06.11.2014 Gazette 2014/45)**

(54) **PROCEDE DE VERIFICATION DU FONCTIONNEMENT D'UN GROUPE MOTOPROPULSEUR EQUIPANT UN VEHICULE AUTOMOBILE ET SYSTEME CORRESPONDANT**

VERFAHREN ZUR ÜBERPRÜFUNG DER FUNKTIONSFÄHIGKEIT EINER ANTRIEBSEINHEIT FÜR EIN KRAFTFAHRZEUG UND ENTSPRECHENDES SYSTEM

METHOD OF VERIFYING THE OPERATION OF A MOTOR PROPULSION PLANT FITTED TO AN AUTOMOTIVE VEHICLE AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2013 FR 1354080**

(43) Date de publication de la demande:
**09.03.2016 Bulletin 2016/10**

(73) Titulaire: **Renault s.a.s.**
**92100 Boulogne-Billancourt (FR)**

(72) Inventeur: **MALOUM, Abdelmalek**
**F-94550 Chevilly la Rue (FR)**

(56) Documents cités:
**JP-A- 2001 268 980     US-A- 5 047 699**
**US-A1- 2002 008 492     US-A1- 2013 077 194**

**Description**

L'invention concerne la vérification du fonctionnement d'un groupe motopropulseur équipant un véhicule automobile, et en particulier la vérification du fonctionnement des capteurs embarqués dans le groupe motopropulseur, et les groupes motopropulseurs munis de machines à aimant permanent.

Dans les véhicules automobiles à traction électrique, le couple fourni par un moteur électrique doit être contrôlé. Le couple d'une machine électrique étant directement lié au courant circulant dans celle-ci, ces courants doivent être commandés de façon précise.

Dans une machine synchrone, notamment une machine synchrone triphasée à aimant permanent et à flux axial, les courants circulant dans les trois phases du stator sont sinusoïdaux et déphasés chacun de $\frac{2\pi}{3} rad$. Ces courants créent un champ magnétique tournant dans la machine électrique. Le rotor est composé d'un aimant permanent, par exemple muni de cinq paires de pôles. Comme une boussole, le rotor s'aligne naturellement sur le champ magnétique tournant créé par le stator. Ainsi, la fréquence de rotation du rotor est égale à la fréquence des courants du stator. Ce sont les amplitudes des courants du stator et la puissance des aimants du rotor qui créent le couple nécessaire à la rotation de la machine. Pour commander ces courants, il faut donc appliquer à chaque phase du stator des tensions sinusoïdales déphasées de $\frac{2\pi}{3} rad$ chacune également.

Généralement, il est plus simple d'appliquer une régulation sur des constantes que sur des signaux sinusoïdaux. La transformée de Park est généralement utilisée pour projeter un système triphasé sur un espace bidimensionnel pour se retrouver dans un repère tournant équivalent. Il est ainsi possible de transposer les trois courants et les trois tensions sinusoïdales du stator relatives aux trois phases d'un système triphasé dans un espace où les signaux sinusoïdaux s'expriment sous la forme de signaux constants (une composante sur l'axe direct d et une composante sur l'axe en quadrature q). Dans le cas d'une machine synchrone le repère de Park est lié au rotor.

En travaillant avec des courants et des tensions exprimées dans l'espace de Park, il est ainsi possible d'agir sur des courants et des tensions constantes plutôt que sur des signaux sinusoïdaux pour réguler la machine triphasée à commander. En faisant la transformée inverse, il est possible de se ramener au repère normal de la machine et donc de savoir exactement quelles tensions ou quels courants appliquer sur chaque phase de la machine.

On utilise généralement des capteurs de courants pour mettre en oeuvre une régulation du couple. On peut également utiliser des capteurs aptes à mesurer le couple.

Comme on le conçoit, une défaillance d'un des capteurs empêche la régulation correcte du couple qui doit être fourni par la machine électrique. Il est donc nécessaire de détecter une telle défaillance.

On pourra se référer au document JP 2001268980 qui décrit une estimation du courant circulant dans une machine à courant continu, mais cette solution n'est pas adaptée aux machines fonctionnant avec des courants sinusoïdaux.

Le document US 5047699 décrit également une estimation du courant circulant dans une machine à courant continu.

Le document US 20020008492 décrit une détection de la défaillance de capteurs dans laquelle on contrôle les variations des mesures fournies par les capteurs.

le document US20130077194 décrit une détection de la défaillance des capteurs de courant en comparant à un seuil le rapport de la somme des courants de phase au module du courant de commande dans le repère de Park, si ce rapport est supérieur à un seuil alors un défaut est détecté.

L'invention a donc pour but de permettre une vérification du fonctionnement d'une machine électrique ayant un rotor à aimant permanent, et qui peut être mise en oeuvre dans des régimes statiques et dynamiques.

L'invention a donc pour objet, selon un premier aspect, un procédé de vérification du fonctionnement d'un groupe motopropulseur équipant un véhicule automobile à traction électrique ou hybride, le groupe motopropulseur comprenant un moteur électrique muni d'un rotor à aimant permanent et d'un stator, ledit procédé comprenant une régulation des courants du stator délivrant des signaux de commande au moteur électrique, lesdits courants à réguler et lesdits signaux de commande étant exprimés dans un repère tournant comprenant un axe direct et un axe quadratique, et une mesure des composantes directes et quadratiques des courants.

Selon une caractéristique générale, le procédé comprend :

- une application, dans un modèle du moteur électrique liant les signaux de commande aux composantes directes et quadratiques des courants, d'un changement de variable par calcul de nouvelles variables X et Y selon les relations $X=I_q{}^3+I_d{}^3$ et $Y=I_q-I_d$, dans lesquelles $I_d$ et $I_q$ désignent respectivement la composante directe du courant et la composante quadratique du courant,

- une détermination de bornes minimales et maximales des variables modifiées pour en déduire des bornes minimales et maximales pour les composantes directes et quadratiques du courant,
- une comparaison entre les composantes directes et quadratiques mesurées des courants et lesdites bornes minimales et maximales.

Le modèle du moteur électrique d'une machine dont le rotor est un aimant permanent est un système qui n'est pas coopératif. En mettant en oeuvre le changement de variable énoncé ci-avant, on obtient un système qui est coopératif, en d'autres termes, si les termes apparaissant dans ce système sont bornés alors tel est également le cas pour les variables X et Y de ce système.

Ainsi, on peut obtenir des valeurs minimales et maximales pour X et Y en bornant les termes qui apparaissent dans le système, et on peut en déduire les bornes minimales et maximales pour $I_q$ et $I_d$.

Si le résultat de la comparaison indique que la valeur mesurée est en dehors de ces bornes, alors on peut considérer qu'un ou plusieurs capteurs sont défaillants. On peut ensuite par exemple limiter l'utilisation du moteur électrique. On obtient donc un fonctionnement davantage sécurisé.

Le procédé peut comprendre en outre une mesure du couple généré par le moteur électrique, par exemple par un couplemètre, un calcul de bornes minimales et maximales pour le couple à partir des bornes minimales et maximales pour la composante quadratique du courant, et une comparaison entre le couple mesuré et lesdites bornes minimales et maximales pour le couple.

Dans une telle machine électrique, le couple est lié au nombre de paires de pôles du rotor, au flux généré par les aimants du rotor et à la composante quadratique du courant. On peut donc déduire des bornes minimales et maximales pour $I_q$ des bornes pour le couple.

Le procédé peut comprendre une élaboration d'au moins un signal si l'une des valeurs mesurées est en dehors des bornes déterminées.

L'invention a également pour objet, selon un deuxième aspect, un système de vérification du fonctionnement d'un groupe motopropulseur équipant un véhicule automobile à traction électrique ou hybride, le groupe motopropulseur comprenant un moteur électrique muni d'un rotor à aimant permanent et d'un stator, le véhicule comprenant des moyens configurés pour réguler des courants du stator délivrant des signaux de commande au moteur électrique, lesdits courants à réguler et lesdits signaux de commande étant exprimés dans un repère tournant comprenant un axe direct et un axe quadratique, des moyens configurés pour mesurer des composantes directes et quadratiques des courants.

Selon une caractéristique générale, le système comprend :

- des moyens configurés pour appliquer, dans un modèle du moteur électrique liant les signaux de commande aux composantes directes et quadratiques des courants, un changement de variable par calcul de nouvelles variables X et Y selon les relations $X=I_q^3+I_d^3$ et $Y=I_q-I_d$, dans lesquelles $I_d$ et $I_q$ désignent respectivement la composante directe du courant et la composante quadratique du courant,
- des moyens configurés pour déterminer des bornes minimales et maximales pour X et Y aptes à déduire des bornes minimales et maximales pour les composantes directe et quadratique du courant,
- des moyens configurés pour comparer les composantes directes et quadratiques mesurées des courants et lesdites bornes minimales et maximales.

Le système peut comprendre en outre des moyens configurés pour calculer des bornes minimales et maximales pour le couple à partir des bornes minimales et maximales pour la composante quadratique du courant, et des moyens de comparaison entre un couple mesuré par des moyens de mesure du couple du véhicule et lesdites bornes minimales et maximales pour le couple.

Le système peut comprendre des moyens configurés pour élaborer au moins un signal si l'une des valeurs mesurées est en dehors des bornes déterminées.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre schématiquement différentes étapes d'un procédé selon un mode de mise en oeuvre de l'invention, et
- la figure 2 illustre schématiquement un système selon un mode de réalisation de l'invention.

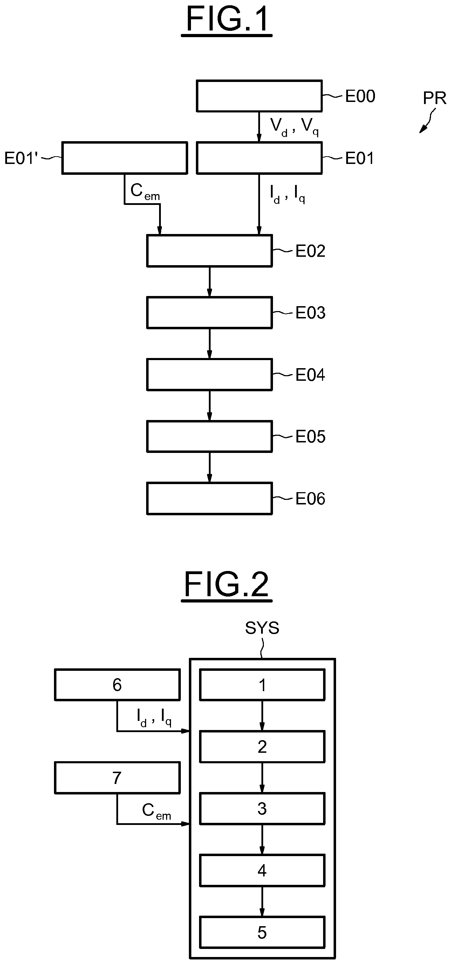

Sur la figure 1 on a représenté de manière schématique les différentes étapes d'un procédé PR de vérification du fonctionnement d'un groupe motopropulseur équipant un véhicule automobile à traction électrique ou hybride. Le groupe motopropulseur de ce véhicule peut comprendre un moteur électrique muni d'un rotor à aimant permanent et d'un stator.

Une première étape E00 peut être mise en oeuvre dans laquelle on régule les courants du stator (ou le couple) pour obtenir des signaux de commande. Ces signaux de commandes peuvent être exprimés dans l'espace de Park et par exemple notés $V_d$ (composante sur l'axe direct) et $V_q$ (composante sur l'axe en quadrature). Cette régulation peut être mise en oeuvre par des moyens classiques, par exemple en utilisant un correcteur proportionnel-intégral ou proportionnel-intégral-dérivé.

Le procédé peut également comprendre une mesure des composantes directes et quadratiques des courants notés $I_d$ (composante directe) et $I_q$ (composante quadratique) dans l'étape E01. L'étape E01 peut, en variante, être mise en oeuvre plus tardivement dans le procédé pour mettre en oeuvre une comparaison avec des bornes déterminées.

Simultanément à l'étape E01, on peut mettre en oeuvre une étape E01' de mesure du couple noté $C_{em}$.

On peut ensuite mettre en oeuvre une étape E02 d'élaboration d'un modèle du moteur électrique liant les signaux de commande aux composantes directes et quadratiques des courants. En variante, l'étape E02 est mise en oeuvre préalablement et on utilise le même modèle à chaque mise en oeuvre du procédé.

Il convient de noter que dans l'espace de Park, un tel modèle correspond au système d'équations suivant :

$$\begin{cases} V_d = R_s I_d + L_d \dot{I}_d - \omega_r L_q I_q \\ V_q = R_s I_q + L_q \dot{I}_q - \omega_r \left( L_d I_d + \phi_f \right) \end{cases} \quad (EQ1)$$

Avec $R_s$ la résistance équivalente du stator de la machine, $L_d$ et $L_q$ les inductances sur chaque axe respectivement direct et en quadrature du plan de Park de la machine, $\omega_r$ la vitesse de rotation du champ magnétique de la machine (soit la vitesse de rotation du rotor multipliée par le nombre de paires de pôles de la machine noté p), et $\phi_f$ le flux généré par les aimants du rotor.

Il convient également de noter que le système d'équations EQ1 n'est pas coopératif. Aussi, pour une machine dans laquelle $L_d$ et $L_q$ sont égaux, on obtient la valeur de couple électromagnétique $C_{em}$ suivante :

$$C_{em} = p \Phi_f I_q \quad (EQ2)$$

Avec p le nombre de paires de pôles de la machine, et $\Phi_f$ le flux généré par les aimants du rotor.

Afin de rendre le système d'équations EQ1 coopératif, on peut mettre en oeuvre l'étape E03 de changement de variable. Dans cette étape, on peut noter X et Y les nouvelles variables, avec $X = I_q^3 + I_d^3$ et $Y = I_q - I_d$. En notant $U_x$ et $U_y$ les nouveaux signaux de commande appliqués en entrée du système, on obtient le système d'équation suivant :

$$\begin{cases} \dfrac{3}{L_s} U_x = \dfrac{3}{L_s} \left( I_d^2 V_d + I_q^2 V_q \right) = \dfrac{3R_s}{L_s} X + \dot{X} + 3\omega_r I_q \left[ I_d \left( I_q - I_d \right) + \dfrac{\Phi_f}{L_s} \right] \\ \dfrac{1}{L_s} U_y = \dfrac{1}{L_s} \left( -V_d + V_q \right) = \dfrac{R_s}{L_s} Y + \dot{Y} + \omega_r \left[ I_d + I_q + \dfrac{\Phi_f}{L_s} \right] \end{cases} \quad (EQ3)$$

Ce changement de variable est mis en oeuvre en dérivant les expressions de X et Y pour remplacer les valeurs de $I_q$ et de $I_d$ ou de leur dérivées obtenues par le système d'équations EQ1.

On peut noter que l'on obtient un système coopératif. De ce fait, en notant min les bornes minimales et max les bornes maximales, et $X^+$ et $X^-$ les bornes respectivement maximales et minimales pour X et $Y^+$ et $Y^-$ les bornes respectivement maximales et minimales pour Y, on obtient, dans une étape E04, le système suivant :

$$\begin{cases} \min\left( \dfrac{3}{L_s} U_x \right) = \min\left( \dfrac{3R_s}{L_s} \right) X^- + \dot{X}^- + 3\omega_r I_q I_d \left( I_q - I_d \right) + \min\left( 3\omega_r I_q \dfrac{\Phi_f}{L_s} \right) \\ \min\left( \dfrac{1}{L_s} U_y \right) = \min\left( \dfrac{R_s}{L_s} \right) Y^- + \dot{Y}^- + \omega_r \left( I_d + I_q \right) + \min\left( \omega_r \dfrac{\Phi_f}{L_s} \right) \\ \max\left( \dfrac{3}{L_s} U_x \right) = \max\left( \dfrac{3R_s}{L_s} \right) X^+ + \dot{X}^+ + 3\omega_r I_q I_d \left( I_q - I_d \right) + \max\left( 3\omega_r I_q \dfrac{\Phi_f}{L_s} \right) \\ \max\left( \dfrac{1}{L_s} U_y \right) = \max\left( \dfrac{R_s}{L_s} \right) Y^+ + \dot{Y}^+ + \omega_r \left( I_d + I_q \right) + \max\left( \omega_r \dfrac{\Phi_f}{L_s} \right) \end{cases} \quad (EQ4)$$

Il convient de noter que min($3/L_s$*$U_x$)=max($3/L_s$)*$U_x$ si $U_x$ est négatif, ou min($3/L_s$)*$U_x$ si $U_x$ est positif.

A chaque instant t après l'instant initial $t_0$, on sait que les valeurs mesurées de X et Y (obtenues à partir des mesures de $I_d$ et $I_q$) vérifient les deux équations suivantes :

$$\begin{cases} X^-(t) & \leq & X(t) & \leq & X^+(t) \\ Y^-(t) & \leq & Y(t) & \leq & Y^+(t) \end{cases} \quad (EQ5)$$

Aussi, il convient de noter que l'on peut déterminer lors d'étapes préalables de calibration les bornes minimales et maximales de Rs, Ls, $\omega_r$ et $\Phi_f$. On peut donc déduire du système EQ4 les valeurs de $X^+$, $X^-$, $Y^+$ et $Y^-$.

On peut également obtenir les valeurs des bornes maximales ($I_d^+$ et $I_q^+$) et minimales ($I_d^-$ et $I_q^-$) par la résolution du système suivant :

$$\begin{cases} X^- & = & \left(I_q^-\right)^3 + \left(I_d^-\right)^3 \\ Y^- & = & I_q^- - I_q^+ \\ X^+ & = & \left(I_q^+\right)^3 + \left(I_d^+\right)^3 \\ Y^+ & = & I_q^+ - I_q^- \end{cases} \quad (EQ6)$$

Aussi, avec la formule de l'équation EQ2, on peut obtenir des bornes minimales et maximales pour le couple $C_{em}$.

L'étape E05 peut alors être mise en oeuvre, dans laquelle on compare les valeurs mesurées préalablement dans les étapes E01 et E01' aux bornes obtenues dans l'étape E04.

Si on constate qu'une des mesures est en dehors des bornes correspondant à cette mesure, on peut mettre en oeuvre une étape E06 d'élaboration de signaux indiquant la défaillance du capteur.

Sur la figure 2, on a représenté un système SYS, par exemple embarqué au sein d'un véhicule automobile à traction électrique ou hybride muni d'un groupe motopropulseur ayant un rotor à aimant permanent.

Le système SYS peut être intégré dans une unité de commande électronique du véhicule ou dans d'autres types de calculateurs embarqués dans un véhicule. Aussi, le véhicule peut comprendre d'autres moyens non représentés sur la figure 2 mais qui communique avec le système SYS, par exemple des moyens configurés pour réguler des courants du stator délivrant des signaux de commande au moteur électrique.

Le système SYS comprend des moyens 1 configurés pour élaborer un modèle du moteur électrique liant les signaux de commande aux composantes directes et quadratiques des courants. Les moyens 1 sont configurés pour mettre en oeuvre l'étape E02 décrite en se référant à la figure 1. En variante, le système SYS ne comprend pas de moyens configurés pour élaborer un modèle du moteur électrique liant les signaux de commande aux composantes directes et quadratiques des courants, un tel model ayant été élaboré préalablement.

Le système SYS comprend également des moyens 2 configurés pour appliquer dans ledit modèle un changement de variable dans lequel X=$I_q^3$+$I_d^3$, Y=$I_q$-$I_d$. En d'autres termes, les moyens 2 sont configurés pour mettre en oeuvre l'étape E03.

Le système SYS comprend également des moyens 3 configurés pour déterminer des bornes minimales et maximales pour X et Y aptes à déduire des bornes minimales et maximales pour $I_q$ et $I_d$ (étape E04) et des moyens 4 configurés pour comparer les composantes directes et quadratiques mesurées des courants et lesdites bornes minimales et maximales pour $I_q$ et $I_d$ (étape E05).

Préférentiellement, le système SYS comprend des moyens configurés 5 pour élaborer au moins un signal si l'une des valeurs mesurées est en dehors des bornes déterminées (étape E06).

Le véhicule peut également comprendre des moyens 6 de mesure ou capteurs des courants Id et Iq, et également des moyens 7 de mesure du couple. Le système SYS et le procédé PR permettent de déterminer si ces capteurs fonctionnent.

Grace à l'invention, on peut déterminer si des capteurs de courants fonctionnent dans tout type de régime, dynamique ou permanent. On peut ainsi limiter l'utilisation du moteur électrique.

**Revendications**

1. Procédé de vérification du fonctionnement d'un groupe motopropulseur équipant un véhicule automobile à traction électrique ou hybride, le groupe motopropulseur comprenant un moteur électrique muni d'un rotor à aimant permanent et d'un stator, ledit procédé comprenant une régulation (E00) des courants du stator délivrant des signaux de commande au moteur électrique, lesdits courants à réguler et lesdits signaux de commande étant exprimés dans un repère tournant comprenant un axe direct et un axe quadratique, et une mesure des composantes directes et quadratiques des courants (E01), **caractérisé en ce qu'**il comprend :

- une application (E03), dans un modèle du moteur électrique liant les signaux de commande aux composantes directes et quadratiques des courants, d'un changement de variable par calcul de nouvelles variables X et Y selon les relations $X=I_q^3+I_d^3$ et $Y=I_q-I_d$, dans lesquelles $I_d$ et $I_q$ désignent respectivement la composante directe du courant et la composante quadratique du courant,
- une détermination (E04) de bornes minimales et maximales des variables modifiées pour en déduire des bornes minimales et maximales pour les composantes directes et quadratiques du courant,
- une comparaison (E05) entre les composantes directes et quadratiques mesurées des courants et lesdites bornes minimales et maximales.

2. Procédé selon la revendication 1, comprenant en outre une mesure du couple généré par le moteur électrique (E01'), un calcul de bornes minimales et maximales pour le couple à partir des bornes minimales et maximales pour la composante quadratique du courant, et une comparaison entre le couple mesuré et lesdites bornes minimales et maximales pour le couple.

3. Procédé selon la revendication 1 ou 2, comprenant une élaboration d'au moins un signal (E06) si l'une des valeurs mesurées est en dehors des bornes déterminées.

4. Système de vérification du fonctionnement d'un groupe motopropulseur équipant un véhicule automobile à traction électrique ou hybride, le groupe motopropulseur comprenant un moteur électrique muni d'un rotor à aimant permanent et d'un stator, le véhicule comprenant des moyens configurés pour réguler des courants du stator délivrant des signaux de commande au moteur électrique, lesdits courants à réguler et lesdits signaux de commande étant exprimés dans un repère tournant comprenant un axe direct et un axe quadratique, et des moyens configurés pour mesurer des composantes directes et quadratiques des courants (6), **caractérisé en ce qu'**il comprend :

- des moyens (2) configurés pour appliquer, dans un modèle du moteur électrique liant les signaux de commande aux composantes directes et quadratiques des courants, un changement de variable par calcul de nouvelles variables X et Y selon les relations $X=I_q^3+I_d^3$ et $Y=I_q-I_d$, dans lesquelles $I_d$ et $I_q$ désignent respectivement la composante directe du courant et la composante quadratique du courant,
- des moyens (3) configurés pour déterminer des bornes minimales et maximales pour X et Y aptes à déduire des bornes minimales et maximales pour les composantes directe et quadratique du courant,
- des moyens (4) configurés pour comparer les composantes directes et quadratiques mesurées des courants et lesdites bornes minimales et maximales.

5. Système selon la revendication 4, comprenant en outre des moyens configurés pour calculer des bornes minimales et maximales pour le couple à partir des bornes minimales et maximales pour la composante quadratique du courant, et des moyens de comparaison entre un couple mesuré par des moyens de mesure (7) du couple du véhicule et lesdites bornes minimales et maximales pour le couple.

6. Système selon la revendication 4 ou 5, comprenant des moyens (5) configurés pour élaborer au moins un signal si l'une des valeurs mesurées est en dehors des bornes déterminées.


**Patentansprüche**

1. Verfahren zur Überprüfung des Betriebs einer Antriebseinheit, die ein Kraftfahrzeug mit Elektro- oder Hybridantrieb bestückt, wobei die Antriebseinheit einen mit einem Rotor mit Dauermagnet und mit einem Stator versehenen Elektromotor enthält, wobei das Verfahren eine Regelung (E00) der Ströme des Stators, die Steuersignale an den Elektromotor liefern, wobei zu die regelnden Ströme und die Steuersignale in einem drehenden Bezugssystem ausgedrückt werden, das eine direkte Achse und eine quadratische Achse enthält, und eine Messung (E01) der direkten und quadratischen Komponenten der Ströme enthält, **dadurch gekennzeichnet, dass** es enthält:

- eine Anwendung (E03), in einem Modell des Elektromotors, das die Steuersignale mit den direkten und quadratischen Komponenten der Ströme verbindet, einer Variablenänderung durch Berechnung neuer Variablen X und Y gemäß den Beziehungen $X=I_q{}^3+I_d{}^3$ und $Y=I_q-I_d$, in denen $I_d$ und $I_q$ die direkte Komponente des Stroms bzw. die quadratische Komponente des Stroms bezeichnen,
- eine Bestimmung (E04) von minimalen und maximalen Grenzen der veränderten Variablen, um daraus minimale und maximale Grenzen für die direkten und quadratischen Komponenten des Stroms abzuleiten,
- einen Vergleich (E05) zwischen den gemessenen direkten und quadratischen Komponenten der Ströme und den minimalen und maximalen Grenzen.

2. Verfahren nach Anspruch 1, das außerdem eine Messung des vom Elektromotor (E01') erzeugten Drehmoments, eine Berechnung von minimalen und maximalen Grenzen für das Drehmoment ausgehend von den minimalen und maximalen Grenzen für die quadratische Komponente des Stroms, und einen Vergleich zwischen dem gemessenen Drehmoment und den minimalen und maximalen Grenzen für das Drehmoment enthält.

3. Verfahren nach Anspruch 1 oder 2, das eine Erarbeitung mindestens eines Signals (E06) enthält, wenn einer der gemessenen Werte sich außerhalb der bestimmten Grenzen befindet.

4. System zur Überprüfung des Betriebs einer Antriebseinheit, die ein Kraftfahrzeug mit Elektro- oder Hybridantrieb bestückt, wobei die Antriebseinheit einen mit einem Rotor mit Dauermagnet und mit einem Stator versehenen Elektromotor enthält, wobei das Fahrzeug Einrichtungen, die konfiguriert sind, Ströme des Stators zu regeln, die Steuersignale an den Elektromotor liefern, wobei die zu regelnden Ströme und die Steuersignale in einem drehenden Bezugssystem ausgedrückt werden, das eine direkte Achse und eine quadratische Achse enthält, und Einrichtungen enthält, die konfiguriert sind, direkte und quadratische Komponenten der Ströme (6) zu messen, **dadurch gekennzeichnet, dass** es enthält:

- Einrichtungen (2), die konfiguriert sind, in einem Modell des Elektromotors, das die Steuersignale mit den direkten und quadratischen Komponenten der Ströme verbindet, eine Variablenänderung durch Berechnung neuer Variablen X und Y gemäß den Beziehungen $X=I_q{}^3+I_d{}^3$ und $Y=I_q-I_d$ anzuwenden, in denen $I_d$ und $I_q$ die direkte Komponente des Stroms bzw. die quadratische Komponente des Stroms bezeichnen,
- Einrichtungen (3), die konfiguriert sind, minimale und maximale Grenzen für X und Y zu bestimmen, die minimale und maximale Grenzen für die direkte und die quadratische Komponente des Stroms ableiten können,
- Einrichtungen (4), die konfiguriert sind, die gemessenen direkten und quadratischen Komponenten der Ströme und die minimalen und maximalen Grenzen zu vergleichen.

5. System nach Anspruch 4, das außerdem Einrichtungen, die konfiguriert sind, minimale und maximale Grenzen für das Drehmoment ausgehend von den minimalen und maximalen Grenzen für die quadratische Komponente des Stroms zu berechnen, und Einrichtungen zum Vergleich zwischen einem von Messeinrichtungen (7) des Drehmoments des Fahrzeugs gemessenen Drehmoment und den minimalen und maximalen Grenzen für das Drehmoment enthält.

6. System nach Anspruch 4 oder 5, das Einrichtungen (5) enthält, die konfiguriert sind, mindestens ein Signal zu erarbeiten, wenn einer der gemessenen Werte sich außerhalb der bestimmten Grenzen befindet.

**Claims**

1. Method for verifying the operation of a power train with which a motor vehicle with electric or hybrid drive is equipped, a power train comprising an electric motor provided with a permanent magnet rotor and a stator, said method comprising a regulation (E00) of the stator currents delivering control signals to the electric motor, said currents to be regulated and said control signals being expressed in a revolving reference frame comprising a direct axis and a quadratic axis, and a measurement of the direct and quadratic components of the currents (E01), **characterized in that** it comprises:

- an application (E03), in a model of the electric motor linking the control signals to the direct and quadratic components of the currents, of a change of variable by computation of new variables X and Y according to the relationships $X=I_q{}^3+I_d{}^3$ and $Y=I_q-I_d$, in which $I_d$ and $I_q$ respectively denote the direct component of the current and the quadratic component of the current,
- a determination (E04) of minimum and maximum bounds of the modified variables to deduce therefrom minimum and maximum bounds for the direct and quadratic components of the current,
- a comparison (E05) between the measured direct and quadratic components of the currents and said minimum and maximum bounds.

2. Method according to Claim 1, further comprising a measurement of the torque generated by the electric motor (E01'), a computation of minimum and maximum bounds for the torque from the minimum and maximum bounds for the quadratic component of the current, and a comparison between the measured torque and said minimum and maximum bounds for the torque.

3. Method according to Claim 1 or 2, comprising a generation of at least one signal (E06) if one of the measured values is outside the determined bounds.

4. System for verifying the operation of a power train with which a motor vehicle with electric or hybrid drive is equipped, the power train comprising an electric motor provided with a permanent magnet rotor and a stator, the vehicle comprising means configured to regulate stator currents delivering control signals to the electric motor, said currents to be regulated and said control signals being expressed in a revolving reference frame comprising a direct axis and a quadratic axis, and means configured to measure direct and quadratic components of the currents (6), **characterized in that** it comprises:

- means (2) configured to apply, in a model of the electric motor linking the control signals to the direct and quadratic components of the currents, a change of variable by computation of new variables X and Y according to the relationships $X = I_q^3 + I_d^3$ and $Y = I_q - I_d$, in which $I_d$ and $I_q$ respectively denote the direct component of the current and the quadratic component of the current,
- means (3) configured to determine minimum and maximum bounds for X and Y suitable for deducing minimum and maximum bounds for the direct and quadratic components of the current,
- means (4) configured to compare the measured direct and quadratic components of the currents and said minimum and maximum bounds.

5. System according to Claim 4, further comprising means configured to compute minimum and maximum bounds for the torque from the minimum and maximum bounds for the quadratic component of the current, and means for comparing a torque measured by means (7) for measuring the torque of the vehicle and said minimum and maximum bounds for the torque.

6. System according to Claim 4 or 5, comprising means (5) configured to generate at least one signal if one of the measured values is outside the determined bounds.

# FIG.1

E00

$V_d$ , $V_q$

E01'     E01

$C_{em}$     $I_d$ , $I_q$

E02

E03

E04

E05

E06

PR

# FIG.2

SYS

6

$I_d$ , $I_q$

7

$C_{em}$

1

2

3

4

5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001268980 B
- US 5047699 A
- US 20020008492 A
- US 20130077194 A